# EUROPÄISCHE PATENTSCHRIFT

(11) **EP 0 423 443 B1**
(45) Veröffentlichungstag und Bekanntmachung des Hinweises auf die Patenterteilung: **28.09.1994**
(21) Anmeldenummer: 90114421.2
(22) Anmeldetag: 27.07.1990
(51) Int. Cl.: H02G 1/12, H01R 43/28

(54) **Verfahren und Einrichtung zur Durchführung des Verfahrens zum Zubringen eines Kabels in einen Kabel-Verarbeitungsautomaten**
Process and device for carrying-out the process to feed a cable into a cable manufacturing automaton
Procédé et dispositif de réalisation du procédé pour l'alimentation d'un câble dans un automate pour façonner des câbles

(30) Priorität: 18.10.1989 CH 3786/89
(43) Veröffentlichungstag der Anmeldung: 24.04.1991
(73) Patentinhaber: TTC TECHNOLOGY TRADING COMPANY, 6045 Meggen (CH)
(72) Erfinder: Koch, Max, Dipl.-Elekt.-Ing. ETH, CH-6045 Meggen (CH)
(74) Vertreter: Reichmuth, Hugo Werner

(56) Entgegenhaltungen:
- EP-A- 0 185 788
- DE-A- 2 047 460
- GB-A- 2 077 518

## Beschreibung

Die Erfindung betrifft ein Verfahren und eine Einrichtung zur Durchführung des Verfahrens zum Zubringen eines Kabels in einen Kabel-Verarbeitungsautomaten, mit zwei gegeneinandergerichteten Riementrieben und einer die vorgegebene Länge eines Kabelabschnittes messenden Kabel-Längenmesseinrichtung, wobei ein erster Riementrieb mit zwei Umlenkrollen und einem Riemen fest angeordnet ist und ein zweiter Riementrieb eine feste antreibbare Umlenkrolle und eine senkrecht zur Zubringrichtung des Kabels parallel verschiebbar gelagerte und eine zweite Umlenkrolle tragende Anpresseinrichtung aufweist, welche durch eine Kraft den Riemen des zweiten Riementriebes gegen den Riemen des ersten Riementriebes, bzw. gegen das zwischen den beiden Riemen eingelegte Kabel drückt und das Kabel durch beide angetriebenen Riemen gegen den Kabel-Verarbeitungsautomaten bewegt.

Eine solche Einrichtung zum Transportieren eines Kabels in einer Drahtschneid- und Abisoliervorrichtung ist mit der DE-OS 2 047 460 bekannt geworden. Bei dieser Einrichtung wird der Draht zwischen zwei gegeneinandergerichteten Riementriebe eingeklemmt und durch die beiden angetriebenen Riemen transportiert. Als Treibriemen dienen Zahnriemen mit glatter Oberfläche, welche über zwei Umlenkrollen umgelenkt sind. Ein Riementrieb ist stationär eingebaut und besitzt zwischen den beiden Umlenkrollen eine über eine gewisse Länge sich erstreckende, fest eingebaute Druckkufe. Der zweite Riementrieb weist eine erste stationäre und angetriebene Umlenkrolle und eine zweite bewegliche Umlenkrolle auf. Die bewegliche Umlenkrolle ist gemeinsam mit einer Druckkufe auf einem senkrecht zur Zufuhrrichtung des Drahtes parallel verschiebbaren Druckplatte angeordnet. Die Druckplatte wird durch die Kraft von zwei Druckfedern gegen die fest eingebaute Druckkufe des stationären Riementriebes gedrückt, so dass die beiden Zahnriemen zwischen den beiden Druckkufen aneinander gepresst bzw. der zwischen den beiden Riemen eingelegte Draht geklemmt wird. Zum Einlegen eines Drahtes zwischen die beiden gegeneinandergerichteten Riemen kann die Druckplatte zusammen mit der Druckkufe und der zweiten Umlenkrolle, mit Hilfe einer Gewindestange und einer Drehmutter gegen die Kraft der beiden Druckfedern vom stationären Riementrieb weggezogen werden.

Ein Nachteil dieser Kabel-Transporteinrichtung liegt darin, dass die Reibung zwischen den Kufen und den verzahnten Seiten der Zahnriemen Abnutzung und Geräusche verursacht und eine Steigerung der Bandgeschwindigkeit nicht gestattet. Ein weiterer Nachteil liegt auch darin, dass gewisse Ungenauigkeiten bei der Längenmessung der Drahtabschnitte entstehen können, indem die Bewegung des Drahtes indirekt von der Drehung des angetriebenen Umlenkrades des festen Riementriebes abgenommen wird.

Eine weitere Vorrichtung zum Transportieren eines Drahtes in einer automatischen Draht-Konfektioniermaschine ist mit der DE-OS 1 590 074 bekanntgeworden, bei welcher der Draht bei jedem Arbeitsspiel durch zwei gegeneinanderschwenkende Riementriebe angetrieben wird. Beide Riementriebe sind während des Betriebes fortlaufend angetrieben und schwenken für die Freigabe des Drahtes für Schneid- und Konfektionierarbeiten auseinander. Dabei bewegt sich gleichzeitig ein entlang des Drahtes hin- und herbewegliches Führungsrohr zwischen die beiden Riementriebe um den Draht während der Freigabe in der richtigen Lage zu halten. Beide Riementriebe sind als Schwenkhebel ausgebildet und besitzen Treibriemen mit flacher äusserer Treibfläche und längsgerillten Innenflächen, welche um zwei Umlenkrollen und eine einstellbare Druckrolle gelegt sind. Die fest angeordneten Schwenkachsen sind gleichzeitig die Achsen für die Aufnahme der angetriebenen Umlenkrollen. Zwischen der nicht angetriebenen Umlenkrolle und der einstellbaren Druckrolle bildet der Treibriemen bei beiden Mit der EP-A-0 185 788 ist eine Kabeltransporteinrichtung bekannt geworden, die ebenfalls zwei Riementriebe aufweist. Hierbei ist der erste Riementrieb ortsfest angeordnet, während der zweite Riementrieb auf einer verschiebbaren Druckplatte angebracht ist. Die Druckplatte ist über eine Achse mit einem Schlitten verbunden, so dass sie Auf- und Abbewegungen sowie Pendelbewegungen durchführen kann. An beiden Seiten der Druckplatte sind pneumatische Zylinder-Kolben-Einheiten angeordnet, die bei Betätigung die Druckplatte und damit den zweiten Riementrieb nach unten in Richtung auf den ortsfesten, ersten Riementrieb pressen. Durch diese Anordnung soll erreicht werden, dass der Anpressdruck gleichmässig über das zu fördernde Kabel verteilt wird, so dass keine punktförmigen Druckstellen auftreten können.

Riementrieben je eine gegeneinandergerichtete Antriebsfläche für die Mitbewegung des Drahtes. Diese beiden gegeneinandergerichteten Antriebsflächen lassen sich durch Verschieben der einstellbaren Druckrolle für eine bestimmte Drahtdicke parallel einstellen. Ändert sich die Drahtdicke ist die Parallelität der beiden Antriebsflächen nicht mehr gegeben und damit eine auf eine gewisse Riemenlänge gleichmässige Druckverteilung nicht mehr gewährleistet, indem entweder die Umlenkrolle oder die Druckrolle mit grösserem Druck auf den Draht wirkt. Diese Einrichtung wäre nicht geeignet für grössere Kabelgeschwindigkeiten und für eine Bewegung des Drahtes in der der Zufuhrrichtung entgegengesetzten Richtung.

Der Erfindung liegt daher die Aufgabe zugrunde ein Verfahren und eine Einrichtung zur Durchführung des Verfahrens vorzuschlagen, welche für grössere Kabelgeschwindigkeiten geeignet sind und welche in der Lage sind, das Kabel in der Längsachse in beiden Richtungen messbar hin- und herzubewegen.

Diese Aufgabe wird durch die in den Ansprüchen 1 und 2 gekennzeichnete Erfindung gelöst.

Die durch die Erfindung erreichten Vorteile sind im wesentlichen darin zu sehen, dass ein Draht oder ein Kabel, vor allem beim ersten Einlegen in der Achsrichtung spannbar ist, wodurch störungsanfällige Einläufe in die Schneidestation und ungenaue Längen vermieden werden, dass wanddickenreduzierte Drähte- oder Kabel unbeschädigt transportiert werden können, und dass grössere Kabelgeschwindigkeiten möglich sind, ohne die Geräuschentwicklung und die Abnutzung merklich zu steigern. Die Genauigkeit der Kabellängen, besonders bei grösseren Kabelgeschwindigkeiten, wird dadurch erreicht, dass das Kabel hin- und herbewegbar ist, ohne dass es sich aufstaucht. Mit Hilfe eines Vierquadranten-Reglers kann dann eine eventuell überfahrene Länge eingependelt und genau justiert werden. Durch die Steigerung der Kabelgeschwindigkeit kann auch die Fabrikationsgeschwindigkeit der Kabelbearbeitung erhöht werden, so dass der Ausstoss und damit die Wirtschaftlichkeit der Gesamtanlage gesteigert wird.

Auf beiliegenden Zeichnungen ist ein Ausführungsbeispiel der Erfindung dargestellt, das im folgenden näher erläutert wird.

Es zeigen:
- Fig. 1: eine Ansicht einer Einrichtung zum Zubringen eines Kabels in einen Kabel-Verarbeitungsautomaten in der ausgefahrenen Ruhestellung zum Einziehen eines Kabels vor Beginn des Arbeitsprozesses,
- Fig. 2: eine Ansicht der Einrichtung zum Zubringen eines Kabels in den Kabel-Verarbeitungsautomaten in der eingefahrenen Arbeitsstellung.

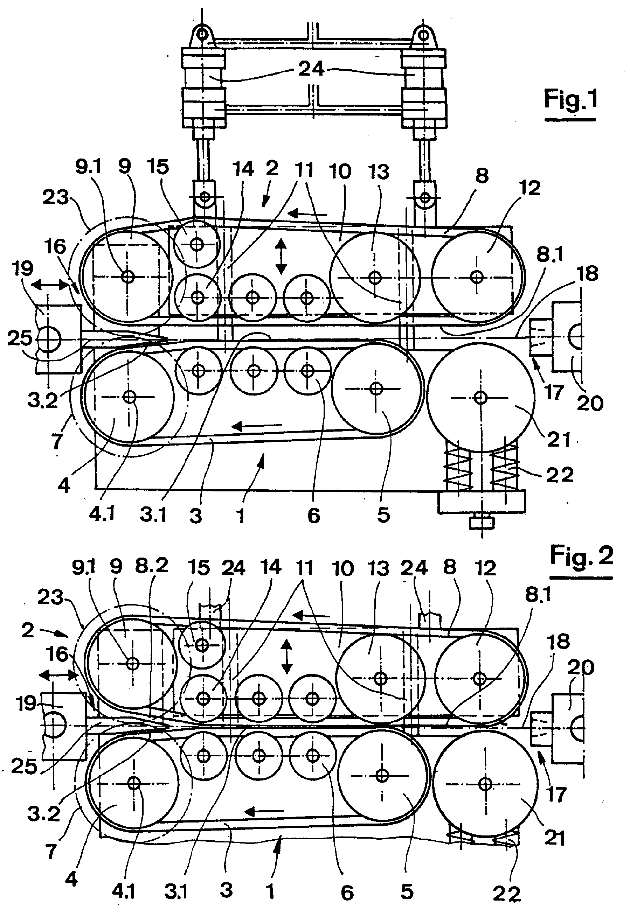

In den Fig. 1 und 2 ist mit 1 ein stationärer Riementrieb bezeichnet. Der stationäre Riementrieb 1 weist einen Zahnriemen 3, eine angetriebene Umlenkrolle 4 eine Umlenkrolle 5 und bespielsweise drei Druckrollen 6 auf. Die Umlenkrolle 5 und die Druckrollen 6 weisen nicht gleiche Durchmesser auf, sind aber so angeordnet, dass sie zusammen mit dem Zahnriemen 3 eine in einer Ebene liegende Antriebsfläche 3.1 bilden. Die Achse 4.1 der angetriebenen Umlenkrolle 4 ist gegenüber den Druckrollen 6 so gelagert, dass der Zahnriemen 3 mit einer Neigung 3.2 in die Antriebsfläche 3.1 einläuft. Auf der gleichen Achse 4.1 ist ein Zahnrad 7 angeordnet. Gegenüber dem stationären Riementrieb 1 ist ein verschiebbar gelagerter Riementrieb 2 vorgesehen, bestehend aus einem Zahnriemen 8, einer auf einer fest angeordneten Achse 9.1 drehbar gelagerten, angetriebenen Umlenkrolle 9 und einer verschiebbar gelagerten Tragplatte 10. Die fest angeordnete Achse 9.1 weist einen stets gleichbleibenden Achsabstand zur Achse 4.1 des stationären Riementriebs 1 auf und trägt zusätzlich ein die Umlenkrolle 9 antreibendes Zahnrad 23, welches in das den stationären Riementrieb 1 antreibende Zahnrad 7 eingreift. Ein nicht dargestellter Antrieb greift mit einem Zahnritzel in eines der Zahnräder 7, 23 ein und treibt die beiden Riementriebe 1, 2 an. Die verschiebbar gelagerte Tragplatte 10 des verschiebbar gelagerten Riementriebes 2 ist beispielsweise auf zwei senkrecht zur Antriebsfläche 3.1 angeordneten Führungszapfen 11 gleitend geführt. Die Tragplatte 10 nimmt eine Umlenkrolle 12 eine Druckrolle 13, beispielsweise drei kleinere Druckrollen 14 und eine Ausgleichsrolle 15 auf. Die Umlenkrolle 12 und die Druckrollen 13, 14 sind auf der Tragplatte 10 so angeordnet, dass sie zusammen mit dem Zahnriemen 8 stehts eine in einer Ebene liegende und parallel zur Antriebsfläche 3.1 des festen Riementriebes 1 verlaufende Antriebsfläche 8.1 bilden. Die Tragplatte 10 kann mit Hilfe einer Antriebseinheit, beispielsweise zwei pneumatische Kolben-Zylindereinheiten 24, gegen den stationären Riementrieb 1 bewegt werden, wobei die Antriebsfläche 8.1 des verschiebbar gelagerten Riementriebes 2 gegen die Antriebsfläche 3.1 des stationären Riementriebes 1 gedrückt wird. Die Ausgleichsrolle 15 dient dazu den Zahnriemen 8 des verschiebbar gelagerten Riementriebes 2 in der ausgefahrenen Ruhestellung unter Spannung zu halten, bzw. eine Längenreserve des Zahnriemens 8, welche für die Verschiebung der Tragplatte 10 mit den Spannrollen 13, 14 und der Umlenkrolle 12 in die Arbeitsstellung benötigt wird, in der ausgefahrenen Ruhestellung aufzunehmen. Zwischen den Antriebsflächen 3.1, 8.1 der beiden aufeinander abwälzenden Zahnriemen 3, 8 ist ein Draht oder Kabel 18 eingelegt. Die Druckrollen 6 und die Umlenkrolle 5 des stationären Riementriebes 1 liegen walzenartig gegenüber den Druckrollen 14, 13 des verschiebbar gelagerten Riementriebes 2, so dass der Draht oder das Kabel 18 durch die beiden in gleicher Richtung bewegten Trums der gegenläufig angetriebenen Riementriebe 1, 2 mitbewegt wird. Auf der Kabel-Zufuhrseite 16 wird das Kabel 18 durch eine in der Achsrichtung des zugeführten Kabels 18 verschiebbar gelagerten Klemm-Spannvorrichtung 19 und auf der Kabel-Austrittseite 17 durch eine Klemmvorrichtung 20 hindurchgeführt. Nach der Klemmvorrichtung 20 ist ein nicht dargestellter Kabel-Verarbeitungsautomat mit beispielsweise einer Schneid- und einer Abisoliereinrichtung und eventuell einer Crimppresse angeordnet. Die Antriebsfläche 8.1 des verschiebbar gelagerten Riementriebes 2 ragt auf der Kabel-Austrittseite 17 mit Hilfe der Umlenkrolle 12 über die Antriebsfläche 3.1 des stationären Riementriebes 1 hinaus. Am Ende dieser auskragenden Antriebsfläche 8.1 ist gegenüber der Umlenkrolle 12 eine Treibrolle 21 einer

Kabel-Längenmesseinrichtung 22 angeordnet, welche mit einer justierbaren Zustellung ausgerüstet ist, die ein Mitdrehen der Treibrolle 21 durch das bewegte Kabel 18 ermöglicht, aber ein Mitdrehen bei fehlendem Kabel 18 durch den Zahnriemen 8 des verschiebbar gelagerten Riementriebes 2 verhindert.

Die vorstehend beschriebene Einrichtung zum Zubringen eines elektrischen Leiters oder eines Kabels 18 in einen Kabel-Verarbeitungsautomaten arbeitet wie folgt: Ein ausgewähltes Kabel 18 wird im ausgefahrenen Ruhestand der Riementriebe 1, 2 bei nicht angetriebenen Zahnriemen 3, 8 manuell durch die Klemm-Spannvorrichtung 19, zwischen den Zahnriemen 3, 8 der beiden Riementriebe 1, 2 hindurch und durch die Klemmvorrichtung 20 geführt. Das Kabel wird von der Klemm-Spannvorrichtung 19 und von der Klemmvorrichtung 20 geklemmt, mit der Klemm-Spannvorrichtug gespannt und der verschiebbar gelagerte Riementrieb 2 beispielsweise mit Hilfe der beiden pneumatischen Kolben-Zylindereinheiten 24 zugestellt, bis das eingezogene Kabel 18 zwischen den beiden Antriebsflächen 3.1, 8.1 der Riementriebe 1, 2 festgehalten ist. Dabei wird die verschiebbar gelagerte Tragplatte 10 des verschiebbaren Riementriebes 2 zusammen mit den Druckrollen 13, 14, der Klemmrolle 12 und der Ausgleichsrolle 15, durch die beiden Führungszapfen 11 parallel geführt, gegen den stationären Riementrieb 1 gefahren, während die angetriebene Umlenkrolle 9 des verschiebbaren Riementriebes 2 ihre Lage beibehält. Die Tragplatte 10 ist durch die Führungszapfen 11 so geführt, dass sich die gebildete Antriebsfläche 8.1 des Zahnriemens 8 parallel gegen die Antriebsfläche 3.1 des Zahnriemens 3 des stationären Riementriebes 1 verschiebt. Zwischen der fest angeordneten Umlenkrolle 9 und der ersten Druckrolle 14 entsteht ein grösserer Achsabstand, so dass der Zahnriemen 2 auch beim verschiebbaren Riementrieb 2 in der eingefahrenen Arbeitsstellung (Fig. 2) mit einer Neigung 8.2 in die Antriebsfläche 8.1 einläuft. Innerhalb der beiden Neigungen 3.2, 8.2 führt eine stationäre, konisch zulaufende Führungsbüchse 25 das Kabel 18 exakt zwischen die Antriebsflächen 3.1, 8.1 der Riementriebe 1, 2. Beim Verschieben der Antriebsfläche 8.1 des verschiebbaren Riementriebes 2 gegen die Antriebsfläche 3.1 des stationären Riementriebes 1 wird der untere Riementrum des Zahnriemens 8 gespannt, während gleichzeitig der obere Riementrum durch das Mitbewegen der Ausgleichsrolle 15 entlastet wird. Die Ausgleichsrolle 15 bewirkt, dass der verschiebbare Riementrieb trotz feststehender, angetriebener Umlenkrolle 9 in jeder Stellung zwischen ausgefahrener Ruhestellung (Fig. 1) und der eingefahrenen Arbeitsstellung (Fig. 2) ungefähr die gleiche Riemenspannung aufweist. Beide Zahnriemen 3.8 sind durch je eine nicht dargestellte Spannvorrichtung zusätzlich spannbar. Durch die über die Antriebsfläche 3.1 des stationären Riementriebes 1 hinausragende Antriebsfläche 8.1 des verschiebaren Riementriebes 2 kommt auch die Oberfläche der Treibrolle 2 der Kabel-Längenmesseinrichtung 22 mit dem festgeklemmten Kabel 18 in Berührung. Die Treibrolle 21 der Kabel-Längenmesseinrichtung 22 kann einen limitierten Weg senkrecht zur Bewegungsrichtung des Kabels 18 ausführen und wird durch die Kraft von Federn an das Kabel 18 angedrückt und später durch das bewegte Kabel 18 angetrieben.

Die Klemmvorrichtung 20 und die Klemm-Spannvorrichtung 19 werden nun gelöst und gleichzeitig der Antrieb für die Riementriebe eingeschaltet, welcher über die Zahnräder 7, 23 beide Riementriebe 1, 2 gleichzeitig und mit gleicher Geschwindigkeit antreibt. Das Kabel 18 wird vorwärtsbewegt und das Kabelende durch die nicht dargestellte Schneidvorrichtung geleitet, angehalten und ein erster Schnitt ausgeführt, das Ende des Kabels abisoliert und mit einem Crimpkontakt versehen. Der Kabel-Längenmesseinrichtung wird eine bestimmte Kabellänge vorgegeben. Der Kabelzubringer ist damit bereit für den automatischen Betrieb, bei welchem die beiden angetriebenen Riementriebe das Kabel vorwärtsbewegen. Das Kabel seinerseits treibt die Treibrolle der Kabel-Längenmesseinrichtung an, bis die vorgegebene Kabellänge erreicht ist und die Längenmesseinrichtung den Impuls zum Stillsetzen der Riementriebe gibt und das Steuerprogramm zum Festhalten des Kabels in der Schneidvorrichtung, zum Betätigen des Schneidmessers der Abisoliereinrichtung, der Crimppresse etc. und zur Wiederholung des beschriebenen Vorganges einsetzt.

In den Fig. 1 und 2 und in der vorliegenden Beschreibung sind zwei Riementriebe dargestellt, in welchen der stationäre Riementrieb vier in einer Ebene angeordnete Rollen und der verschiebbare Riementrieb fünf in einer Ebene angeordnete Rollen aufweist, die je zusammen mit dem zugehörigen Zahnriemen zwei gegeneinandergerichtete Antriebsflächen bilden. Es ist ohne weiteres denkbar, dass auch weniger oder mehr Rollen zur Bildung solcher Antriebsflächen dienen können, es ist aber darauf zu achten, dass stets eine Rolle des stationären Riementriebes mit einer gegenüberliegenden Rolle des verschiebbaren Riementriebes zusammenarbeitet, und dass der verschiebbare Riementrieb in einer Antriebsebene stets eine Rolle mehr aufweist als der feste Riementrieb, wodurch eine die Antriebsfläche des festen Riementriebes überragende Antriebsfläche entsteht, auf der mit Hilfe des mitbewegten Kabels die Treibrolle der Kabel-Längenmesseinrichtung angetrieben wird.

Für die beiden beschriebenen Riementriebe sind zwei gleichartige, handelsübliche Zahnriemen vorgesehen. Es ist aber ohne weiteres denkbar zwei Zahnriemen mit unterschiedlichen Oberflächenhärten für eine weichere und eine härtere Antriebsfläche vorzusehen oder ein Riementrieb mit einem Doppelzahnriemen und der zweite mit einem normalen Zahnriemen auszurüsten.

Anstelle des in der Beschreibung erwähnten manuellen Einbringens eines ausgewählten Kabels in den Kabelzubringer, ist es ohne weiteres denkbar, eine Einrichtung vorzusehen, welche ein vorgegebenes Kabel auswählt und dieses automatisch in den Kabelzubringer einlegt.

## Patentansprüche

1. Verfahren zum Zubringen eines Kabels in einen Kabel-Verarbeitungsautomaten, wobei
- ein ausgewähltes Kabel (18) zwischen die auseinandergefahrenen Antriebsflächen (3.1, 8.1) der Zahnriemen (3, 8) eines stationären (1) und eines verschiebbar gelagerten Riementriebes (2) gelegt wird,
- der verschiebbar gelagerte Riementrieb (2) auf das Kabel (18) aufgeschoben und durch eine Kraft aufgedrückt wird,
- die beiden Riementriebe (1, 2) in entgegengesetzter Drehrichtung angetrieben werden, wobei das Kabel (18) vorwärts bewegt wird,
- die Bewegung des Kabels (18) unterbrochen, dann die genaue vorgegebene Kabellänge eingependelt und der Kabel-Verarbeitungsautomat mit einer Schneid- und einer Abisoliereinrichtung und eventuell einer Crimppresse angesteuert wird, wobei das Kabel (18) geschnitten, beide entstehenden Kabelenden abisoliert und eventuell mit einem Crimpkontakt versehen werden, das abgeschnittene Kabel (18) weggeführt und das verbleibende Kabel (18) um die vorgewählte Kabellänge wieder vorwärts bewegt wird.
dadurch gekennzeichnet,
- dass das Kabel (18) beim Legen zwischen die Antriebsflächen (3.1, 8.1) der Zahnriemen (3, 8) durch eine Kabel-Klemm-Spannvorrichtung (19), hindurchgeführt wird, über eine Treibrolle (21) einer Kabel-Längenmesseinrichtung (22) gelegt wird und durch eine Kabel-Klemmvorrichtung (20) hindurchgeführt wird,
- dass das Kabel (18) vor dem Aufschieben des verschiebbar gelagerten Riementriebes (2) von der Klemm-Spannvorrichtung (19) und der Klemmvorrichtung (20) geklemmt und durch eine Verschiebung der Klemm-Spannvorrichtung (19) gespannt wird, und
- dass die beiden Riementriebe (1, 2) beim gleichzeitigen Öffnen der Klemm-Spannvorrichtung (19) und der Klemmvorrichtung (20) angetrieben werden, wobei durch das vorwärtsbewegte Kabel (18) die Treibrolle (21) der Kabel-Längenmesseinrichtung (22) angetrieben wird.

2. Einrichtung zur Durchführung des Verfahrens zum Zubrigen eines Kabels in einen Kabel-Verarbeitungsautomaten, mit zwei gegeneinandergerichteten Riementrieben (1, 2) und einer die vorgegebene Länge eines Kabelabschnittes messenden Kabel-Längenmesseinrichtung (22), wobei ein erster Riementrieb (1) mit zwei Umlenkrollen (4, 5) und einem Zahnriemen (3) fest angeordnet ist und ein zweiter Riementrieb eine feste antreibbare Umlenkrolle (9) und eine senkrecht zur Zubringrichtung des Kabels (18) parallel verschiebbar gelagerte und eine zweite Umlenkrolle tragende Anpresseinrichtung aufweist, welche durch eine Kraft den Zahnriemen (8) des zweiten Riementriebes (2) gegen den Zahnriemen (3) des ersten Riementriebes (1), bzw. gegen das zwischen den beiden Zahnriemen (3, 8) eingelegte Kabel (18) drückt und das Kabel (18) durch beide angetriebenen Zahnriemen (3, 8) gegen den Kabel-Verarbeitungsautomaten bewegt,
dadurch gekennzeichnet,
dass der erste, fest angeordnete Riementrieb (1) eine zwischen der nicht angetriebenen Umlenkrolle (5) und mindestens einer Druckrolle (6) gebildete Antriebsfläche (3.1) des Zahnriemens (3) aufweist und die Anpresseinrichtung des zweiten Riementriebes (2) eine Druckplatte (10), eine gegenüber der nicht angetriebenen Umlenkrolle (5) angeordnete Druckrolle (13), eine vorgezogene Umlenkrolle (12) und mindestens eine weitere Druckrolle (14) aufweist, wobei die Umlenkrolle (12) und die Druckrollen (13, 14) mit dem Zahnriemen (8) eine über die Antriebsfläche (3.1), des festen Riementriebes (1) hinausragende Antriebsfläche (8.1) bildet, dass an der Druckplatte (10) mindestens eine die Antriebsfläche (8.1) des zweiten Riementriebes (2) gegen die Antriebsfläche (3.1) des ersten Riementriebes (1) verschiebbare pneumatische Kolben-Zylindereinheit angelenkt ist, dass eine Treibrolle (21) der Kabel-Längenmesseinrichtung im Bereich der auskragenden Antriebsfläche (8.1), gegenüber der Umlenkrolle (12) des zweiten Riementriebes (2) angeordnet ist, und dass auf der Kabel-Zufuhrseite (16) eine in der Achsrichtung des Kabels (18) verschiebbar gelagerte, das Kabel (18) klemmende und spannende Klemm-Spannvorrichtung (10) und auf der Kabel-Austrittseite (17) eine das Kabel (18) klemmende, feste Klemmvorrichtung (20) vorgesehen ist.

3. Einrichtung nach Anspruch 2,
dadurch gekennzeichnet,
dass auf der Tragplatte (10) des verschiebbar gelagerten Riementriebes (2) eine den losen Trum bei zurückgefahrenem Riementrieb (2) spannende Ausgleichsrolle (15) angeordnet ist.

4. Einrichtung nach Anspruch 2,
dadurch gekennzeichnet,
dass die beiden Zahnriemen (3, 8) unterschiedlich harte Antriebsflächen (3.1, 8.1) zum Antreiben des Kabels (18) aufweisen.

5. Einrichtung nach Anspruch 2,
dadurch gekennzeichnet,
dass mindestens ein Zahnriemen (3, 8) der Riementriebe (1, 2) ein Doppelzahnriemen ist.

6. Einrichtung nach Anspruch 2,
dadurch gekennzeichnet,
dass die vom bewegten Kabel (18) angetriebene Treibrolle (21) der Kabel-Längenmesseinrichtung (22) eine justierbare, den Zahnriemen (8) bei fehlendem Kabel (18) nicht berührende, durch die Kraft von Federn an das Kabel andrückende Zustelleinrichtung aufweist.

## Claims

1. Method of feeding a cable in a cable-processing automatic machine, wherein
- a selected cable (18) is placed between the driven-apart drive surfaces (3.1, 8.1) of the cogged belts (3, 8) of a stationary belt drive (1) and a displaceably mounted belt drive (2),
- the displaceably mounted belt drive (2) is pushed onto the cable (18) and pressed down by a force,
- the two belt drives (1, 2) are driven in opposite rotational directions, wherein the cable (18) is moved forwards,
- the movement of the cable (18) is interrupted, then the precise preset cable length is swung in and the cable-processing automatic machine is controlled by a cutting and stripping device and possibly a crimping press, wherein the cable (18) is cut and the two resulting cable ends are stripped and possibly provided with a crimp contact, the cut-off cable (18) is led away and the remaining cable (18) is again moved forwards through the preselected cable length,
characterised thereby
- that on placing between the drive surfaces (3.1, 8.1) of the cogged belts (3, 8) the cable (18) is led through a cable clamping and tensioning device (19), placed over a drive roller (21) of a cable length measuring device (22) and led through a cable clamping device (20),
- that before pushing on of the displaceably mounted belt drive (2) the cable (18) is clamped by the clamping and tensioning device (19) and the clamping device (20) and is tensioned by a displacement of the clamping and tensioning device (19), and
- that the two belt drives (1, 2) are driven on simultaneous opening of the clamping and tensioning device (19) and the clamping device (20), wherein the drive roller (21) of the cable length measuring device (22) is driven by the forwardly moved cable (18).

2. Equipment for the carrying out of the method of feeding a cable in a cable-processing automatic machine, comprising two oppositely directed belt drives (1, 2) and a cable length measuring device (22) measuring the preset length of a cable portion, wherein a first belt drive (1) with two deflecting rollers (4, 5) and a cogged belt (3) is arranged fixedly and a second belt drive comprises a fixed, drivable deflecting roller (9) and a pressing device, which is mounted to be displaceable in parallel perpendicularly to the feed direction of the cable (18), carries a second deflecting roller and which presses the cogged belt (8) of the second belt drive (2) by a force against the cogged belt (3) of the first belt drive (1) or against the cable (18) placed between the two cogged belts (3, 8), and the cable (18) is moved by the two driven cogged belts (3, 8) towards the cable-processing automatic machine,
characterised thereby
that the first, fixedly arranged belt drive (1) has a drive surface (3.1), formed between the non-driven deflecting roller (5) and at least one pressure roller (6), of the cogged belt (3) and the pressing device of the second belt drive (2) has a pressure plate (10), a pressure roller (13) arranged opposite the non-driven deflecting roller (5), a deflecting roller (12) drawn forward and at least one further pressure roller (14), wherein the deflecting roller (12) and the pressure rollers (13, 14) form, with the cogged belt (8), a drive surface (8.1) projecting beyond the drive surface (3.1) of the fixed belt drive (1), that at least one pneumatic piston-cylinder unit able to displace the drive surface (8.1) of the second belt drive (2) towards the drive surface (3.1) of the first belt drive (1) is articulated to the pressure plate (10), that a drive roller (21) of the cable length measuring device is arranged in the region of the protruding drive surface (8.1) and opposite the deflecting roller (12) of the second belt drive (2), and that a clamping device (10) clamping and tensioning the cable (18) is mounted at the cable infeed end (16) to be displaceable in the axial direction of the cable (18) and a fixed clamping device (20) clamping the cable (18) is provided at the cable outfeed end (17).

3. Equipment according to claim 2, characterised thereby that a take-up roller (15) tensioning the loose run when the belt drive (2) is moved back is arranged on the carrier plate (10) of the displaceably mounted belt drive (2).

4. Equipment according to claim 2, characterised thereby that the two cogged belts (3, 8) have drive surfaces (3.1, 8.1) of different hardness for the driving of the cable (18).

5. Equipment according to claim 2, characterised thereby that at least one cogged belt (3, 8) of the belt drives (1, 2) is a double cogged belt.

6. Equipment according to claim 2, characterised thereby that the drive roller (21), which is driven by the moved cable (18), of the cable length measuring device (22) comprises an adjustable feeder device pressing against the cable by the force of springs but not contacting the cogged belt (8) in the absence of the cable (18).

## Revendications

1. Procédé pour amener un câble dans un automate de traitement de câbles, selon lequel
- un câble choisi (18) est placé entre les surfaces d'entraînement (3.1, 8.1) écartées des courroies dentées (3, 8) d'une commande à courroie stationnaire (1) et d'une commande à courroie montée mobile (2),
- la commande à courroie montée mobile (2) est amenée sur le câble (18) et pressée sous l'action d'une force,
- les deux commandes à courroie (1, 2) sont entraînées dans des sens de rotation opposés, le câble (18) étant déplacé vers l'avant,
- le déplacement du câble (18) est interrompu, puis la longueur de câble exacte prédéfinie est égalisée et l'automate de traitement de câbles comportant un dispositif de coupe et de dénudage et éventuellement une presse crimp est déclenché, moyennant quoi le câble (18) est coupé, les deux extrémités obtenues sont dénudées et éventuellement pourvues d'un contact crimp, le câble (18) coupé est évacué et le câble (18) restant avance à nouveau de la longueur de câble présélectionnée, caractérisé
- en ce que le câble (18) passe à travers un dispositif tendeur de serrage de câble (19), lors de sa mise en place entre les surfaces d'entraînement (3.1, 8.1) des courroies dentées (3, 8), passe au-dessus d'un cabestan (21) d'un compteur métreur de câble (22) et passe à travers un dispositif de serrage de câble (20),
- en ce que le câble (18), avant l'amenée de la commande à courroie montée mobile (2), est serré par le dispositif tendeur de serrage (19) et le dispositif de serrage (20), et est tendu grâce à un déplacement du dispositif tendeur de serrage (19), et
- en ce que les deux commandes à courroie (1, 2) sont entraînées lors de l'ouverture simultanée du dispositif tendeur de serrage (19) et du dispositif de serrage (20), le cabestan (21) du compteur métreur de câble (22) étant entraîné par le câble (18) déplacé vers l'avant.

2. Dispositif pour la mise en oeuvre du procédé pour amener un câble dans un automate de traitement de câbles, formé de deux commandes à courroie (1, 2) orientées en sens inverse et d'un compteur métreur de câble (22) qui mesure la longueur prédéfinie d'une section de câble, étant précisé qu'une première commande à courroie (1) comportant deux poulies de renvoi (4, 5) et une courroie dentée (3) est fixe, tandis qu'une seconde commande à courroie comporte une poulie de renvoi fixe apte à être entraînée (9) et un dispositif presseur qui est monté perpendiculairement au sens d'amenée du câble (18), est mobile parallèlement et porte une seconde poulie de renvoi, et qui, sous l'action d'une force, presse la courroie dentée (8) de la seconde commande à courroie (2) contre la courroie dentée (3) de la première commande à courroie (1), ou plus exactement contre le câble (18) placé entre les deux courroies dentées (3, 8), et déplace le câble (18), grâce aux deux courroies dentées entraînées (3, 8), vers l'automate de traitement de câbles, caractérisé en ce que la première commande à courroie fixe (1) comporte une surface d'entraînement (3.1) de la courroie dentée (3) définie entre la poulie de renvoi non entraînée (5) et au moins un galet presseur (6), et le dispositif presseur de la seconde commande à courroie (2) comporte une plaque de pression (10), un galet presseur (13) disposé en face de la poulie de renvoi non entraînée (5), une poulie de renvoi (12) disposée en avant et au moins un autre galet de pression (14), étant précisé que la poulie de renvoi (12) et les galets presseurs (13, 14) définissent avec la courroie dentée (8) une surface d'entraînement (8.1) faisant saillie au-dessus de la surface d'entraînement (3.1) de la commande à courroie fixe (1),
en ce qu'il est prévu, au niveau de la plaque de pression (10), au moins une unité piston-cylindre pneumatique apte à déplacer la surface d'entraînement (8.1) de la seconde commande à courroie (2) vers la surface d'entraînement (3.1) de la première commande à courroie (1),
en ce qu'un cabestan (21) du compteur métreur de câble est disposé dans la zone de la surface d'entraînement saillante (8.1), en face de la poulie de renvoi (12) de la seconde commande à courroie (2),
et en ce qu'il est prévu, du côté de l'amenée de câble 16, un dispositif tendeur de serrage (10) monté mobile dans le sens de l'axe du câble (18) et serrant et tendant le câble (18), et du côté de la sortie de câble (17), un dispositif de serrage fixe (20) serrant le câble (18).

3. Dispositif selon la revendication 2, caractérisé en ce qu'il est prévu, sur la plaque de support (10) de la commande à courroie montée mobile (2), un galet d'équilibrage (15) tendant le brin lâche lorsque ladite commande à courroie (2) est rétractée.

4. Dispositif selon la revendication 2, caractérisé en ce que les deux courroies dentées (3, 8) présentent pour l'entraînement du câble (18) des surfaces d'entraînement (3.1, 8.1) de duretés différentes.

5. Dispositif selon la revendication 2, caractérisé en ce que l'une au moins des courroies dentées (3, 8) des commandes à courroie (1, 2) est une double courroie dentée.

6. Dispositif selon la revendication 2, caractérisé en ce que le cabestan (21) du compteur métreur de câble (22) entraîné par le câble (18) déplacé comporte un dispositif d'avance réglable qui ne touche pas la courroie dentée (8), en l'absence d'un câble (18), et qui la presse contre le câble sous l'action de ressorts.
